# EUROPÄISCHE PATENTSCHRIFT

(11) **EP 2 192 060 B1**
(45) Veröffentlichungstag und Bekanntmachung des Hinweises auf die Patenterteilung: **13.11.2013**
(21) Anmeldenummer: 09014604.4
(22) Anmeldetag: 24.11.2009
(51) Int. Cl.: B65G 21/20, A63C 11/04

(54) **Vorrichtung zum Transport von Werkstücken**
Device for transporting workpieces
Dispositif de transport de pièces

(30) Priorität: 26.11.2008 DE 102008059102; 26.11.2008 DE 102008059101
(43) Veröffentlichungstag der Anmeldung: 02.06.2010
(73) Patentinhaber: Reichmann + Sohn GmbH, 89264 Weissenhorn (DE)
(72) Erfinder: Tobisch, Bernhard, 89264 Weissenhorn (DE); Kosmowski, Frank, 89287 Bellenberg (DE); Kustermann, Karl, 73340 Amstetten-Stuberheim (DE)
(74) Vertreter: Dziewior, Joachim

(56) Entgegenhaltungen:
- EP-A1- 1 685 880
- US-A- 4 987 282

## Beschreibung

Die Erfindung betrifft eine Vorrichtung zum Transport von Werkstücken, insbesondere von länglichen Werkstücken wie Ski und vergleichbaren Gegenständen zur Durchführung von Bearbeitungsvorgängen, mit einem Transportband zur Auflage der Werkstücke, ferner mit die Werkstücke in Anlage am Transportband bringenden bzw. haltenden Andruckelementen sowie mit einer Antriebseinheit für die Andruckelemente.

Derartige bekannte Vorrichtungen dienen insbesondere dazu, die Werkstücke in Bearbeitungsmaschinen oder -anlagen zu transportieren. Soweit es sich hierbei um untereinander gleich gestaltete Werkstücke handelt, ist das Transportsystem in der Regel unmittelbar auf die Form und Gestalt dieser Werkstücke ausgerichtet.

Bei der Bearbeitung von Werkstücken wie z.B. Skier, die nach bereits erfolgtem Gebrauch einer nachträglichen Bearbeitung wie Schleifen und ähnlichen Bearbeitungsvorgängen unterworfen werden sollen, besteht jedoch das Problem, dass diese untereinander keine gleiche Gestalt aufweisen, sondern insbesondere in der Länge, aber auch in der Breite stark voneinander abweichende Abmessungen besitzen. Hinzu kommt, dass auch die Bindungen unterschiedliche Maße besitzen, so dass im Ergebnis jedes Werkstück in individueller Art und Weise gegen das Transportband gedrückt und dort in Anlage gehalten werden muss.

Aus der EP 1 685 880 A1 ist eine Bearbeitungsvorrichtung für eine Bindung aufweisende Skier bekannt, bei welcher die Skier mit ihrer Lauffläche auf einem mit Rollen versehenen Rollgang aufliegen. Zwischen den Rollen sind Werkzeuge zum Bearbeiten der Lauffläche und der Kanten angeordnet. Weiter weist die Vorrichtung eine die Skier an die Rollen andrückende Vorschubeinrichtung auf, die wenigstens eine oberhalb des Rollganges vorgesehene Führung für einen Schlitten aufweist, der über die Skilänge verteilte Niederhalter für die Ski trägt.

Der Erfindung liegt die Aufgabe zugrunde, eine Vorrichtung der eingangs genannten Art zu schaffen, mit der die Möglichkeit besteht, Werkstücke von im Wesentlichen zwar ähnlicher Gestalt, jedoch sehr unterschiedlichen Abmessungen zu halten und transportieren, ohne dass es hierzu manueller Eingriffe oder spezieller Anpassungen bedürfte.

Diese Aufgabe wird gemäß einer ersten erfindungsgemäßen Ausgestaltung dadurch gelöst, dass die Antriebseinheit ein vorzugsweise endloses Förderband antreibt, an welchem die Andruckelemente lösbar anschließbar sind, und dass eine Sammelstation für die Andruckelemente vorgesehen ist, in der die von dem Förderband gelösten Andruckelemente aufgereiht und das in Laufrichtung des Förderbandes vorderste Andruckelement unter Berücksichtigung der Position des Werkstücks durch eine Steuereinheit an das Förderband angeschlossen und in Anlage an das Werkstück gebracht wird.

Der durch die Erfindung erreichte Vorteil besteht im Wesentlichen darin, dass in der Sammelstation hintereinander eine Vielzahl von Andruckelementen zur Verfügung stehen, von denen mehrere zum Andruck gegen das Werkstück zum Einsatz gebracht werden können. Die hinsichtlich des gegenseitigen Abstands frei wählbare Anschließbarkeit der Andruckelemente am Förderband ermöglicht es dabei beispielsweise, den Bereich einer Skibindung auszusparen. Weiter besteht die Möglichkeit, die üblicherweise gewölbt ausgebildeten Ski in ihrem mittleren, dadurch vom Transportband abstehenden Bereich in dichterer Anordnung mit Andruckelementen zu versehen, so dass dort höhere Andruckkräfte aufgebracht werden können.

Ein weiterer Vorteil dieser Vorrichtung ist im Übrigen, dass lediglich ein zentraler Antrieb sowohl für die Bearbeitung, als auch für einen eventuellen Rücktransport benötigt wird, da die Kraftübertragung an die einzelnen Andruckelemente ausschließlich über das Förderband erfolgt. Dies bedeutet im Ergebnis, dass keine zusätzliche Energieversorgung für die Andruckelemente mitgeführt werden muss, wodurch sich ein einfacherer und damit auch störungsfreierer Betrieb der Vorrichtung gewährleisten lässt. Im Ergebnis lässt sich somit ein kontinuierlicher Durchlauf der zu bearbeitenden, in ihrer Gestalt variierenden Werkstücke bewerkstelligen, ohne dass zwischenzeitlich Umrüstungen erforderlich wären.

In bevorzugter Ausführungsform der Erfindung weist das Andruckelement zum Anschluss an das Förderband ein Klemmglied auf, das über einen Stellhebel in eine vom Förderband abgehobene Lage verstellbar ist. Dadurch ist es durch einfache Betätigung des Stellhebels möglich, das Andruckelement an das Förderband an- bzw. wieder abzukoppeln.

Hierzu ist im Rahmen der Erfindung weiter vorgesehen, dass die Sammelstation jeweils ein Betätigungselement für den Stellhebel des ersten und zweiten Andruckelements aufweist. Weiter ist hierbei vorgesehen, dass jedes Andruckelement auf seiner dem jeweils nachfolgenden Andruckelement zugewandten Rückseite ein Betätigungselement für den Stellhebel aufweist. Auf diese Weise wird zunächst in der Sammelstation das jeweils vorderste Andruckelement über das Betätigungselement vom Förderband abgekoppelt, wobei alle weiteren in der Sammelstation ankommenden Andruckelemente jeweils über das Betätigungselement des vorangehenden Andruckelements vom Förderband abgekoppelt wird. Gibt die Sammelstation dagegen das vorderste Andruckelement frei, würde das darauf folgende zweite Andruckelement ebenfalls sofort auf das Förderband aufgekoppelt werden; daher sind in der Sammelstation zwei Betätigungselemente vorhanden, wobei das zweite Betätigungselement dafür sorgt, dass nach Freigabe des ersten Andruckelementes das zweite Andruckelement erst verzögert aufgekoppelt und dann in die vorderste Position gebracht wird.

Dazu ist im Rahmen der Erfindung vorgesehen, dass jedes Betätigungselement der Sammelstation zur Freigabe des Andruckelements verstellbar ausgebildet ist. Weiter ist es vorteilhaft, wenn die Sammelstation zusätzlich einen um eine zur Transportebene senkrechte Achse drehbar angeordneten Hebel aufweist, der das Betätigungselement trägt und bei Freigabe des vordersten Andruckelements eine vollständige Drehung um 360° ausführt. Dies ermöglicht eine besonders zuverlässige Vereinzelung des jeweils vordersten Andruckelements.

Weiter ist es hierbei von Vorteil, wenn das Betätigungselement eine zur Anlage an den Stellhebel kommende Rolle aufweist, da hierdurch ein verschleißfreier Ablauf zwischen dem Betätigungselement und dem Stellhebel erfolgt.

Weiter hat es sich als zweckmäßig erwiesen, wenn die Sammelstation für das jeweils erste und zweite Andruckelement eine als Anschlag wirkende Sperrklinke aufweist, wobei bei Freigabe eines Andruckelements zunächst die erste Sperrklinke auslöst und nach deren Rückkehr in die Ausgangslage die zweite Sperrklinke auslöst. Auch dies fördert eine sichere und zuverlässige Vereinzelung des jeweils in vorderster Position in der Sammelstation befindlichen Andruckelements.

Ferner kann bei der Erfindung in bevorzugter Weiterbildung vorgesehen sein, dass die Andruckelmente in einer Führungsschiene über beidseitig an der Führungsschiene ablaufende Rollen geführt sind. Hierdurch ist es möglich, auch ein flexibel ausgebildetes Förderband einzusetzen, da die Führungsfunktion selbst von der Führungsschiene übernommen wird.

Die Andruckelemente sind vorteilhafterweise mit senkrecht zur Transportebene ausgerichteten, axial verstellbaren Druckstangen versehen. Somit können die Andruckelemente als solche im konstanten Abstand zur Transportebene geführt werden, während der Andruck selbst lediglich über die Druckstangen erfolgt. Dazu sind die Druckstangen vorteilhafterweise in einem Gehäuse geführt, wobei im Gehäuse eine an der Druckstange angreifende elastische Federkraft vorgesehen ist.

Diese elastische Federkraft kann in besonders einfacher und daher im Rahmen der Erfindung bevorzugter Ausgestaltung von einer Schraubenfeder gebildet sein.

In weiter vorteilhafter Ausgestaltung der Erfindung kann die dem Werkstück zugewandte Seite der Druckstange mit einem Druckstempel versehen sein, wobei der Druckstempel im Einzelnen an das Material bzw. die Beschaffenheit des Werkstücks angepasst sein kann.

Weiter ist es von Vorteil, wenn die dem Werkstück abgewandte Seite der Druckstange mit einem Laufrad versehen ist, das an einer die axial Lage der Druckstange bestimmenden Kulissenschiene abläuft.

Diese Kulissenschiene kann in vorteilhafter Ausgestaltung von einzelnen Kulissensegmenten gebildet sein, die gelenkig aneinander anschließen und in ihrem Abstand zur Transportebene verstellbar sind. Somit laufen die Druckstangen an der Kulissenschiene ab, deren jeweilige Einstellung bestimmt, ob die Druckstange an dem Werkstück zur Anlage kommt oder nicht.

Um deren jeweilige Ausrichtung beeinflussen zu können, ist vorgesehen, daß die Stellung der Kulissenschienen von der Steuereinheit angesteuert wird.

Schließlich kann das Förderband von einem Riemen, einer Kette, einem Seil oder ähnlichem gebildet sein.

Im Folgenden wird die Erfindung an einem in der Zeichnung dargestellten Ausführungsbeispiel näher erläutert; es zeigen:
- Fig. 1: eine schematische Darstellung einer Vorrichtung nach der Erfindung in Draufsicht, ausgebildet als Schleifstation für Ski,

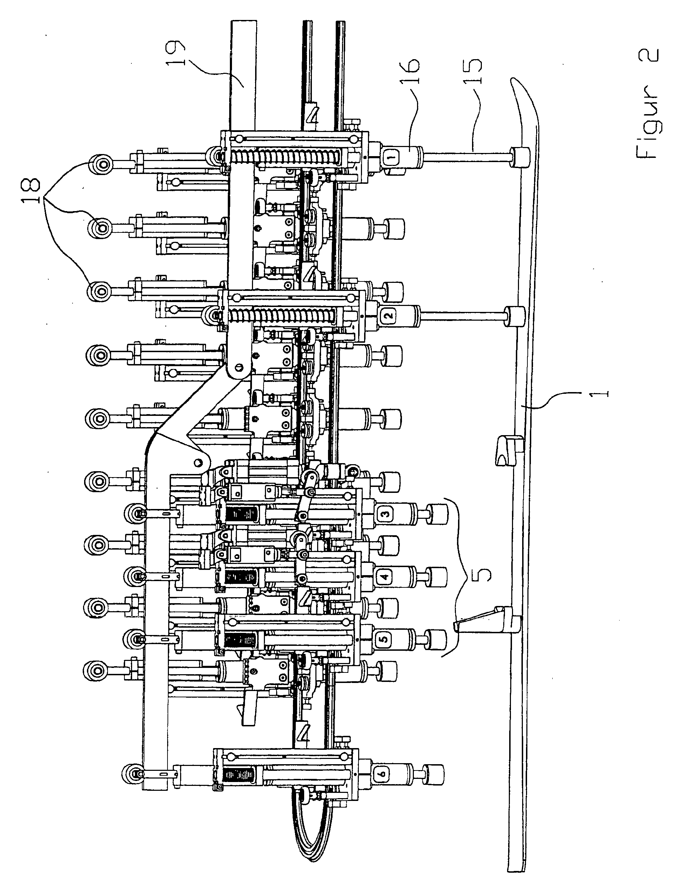

- Fig. 2: eine perspektivische Darstellung mehrerer in Anlage an einem Ski befindlicher Andruckelemente,
- Fig. 3: die Sammelstation mit mehreren Andruckelementen in der Grundstellung,
- Fig. 4: den Beginn der Vereinzelung des vordersten Andruckelements durch Öffnen der Sperrklinke und des Betätigungselements,
- Fig. 5: die Sammelstation nach Ankopplung des vordersten Andruckelements an das Förderband,
- Fig. 6: die Sammelstation nach vollständigem Verlassen des vordersten Andruckelements mit wieder geschlossener Klinke und rückgestelltem Bestätigungselement für die vorderste Position,
- Fig. 7: die Sammelstation nach Öffnen der Klinke und des Betätigungselements für das Andruckelement in der zweiten Position,
- Fig. 8: die Sammelstation nach Aufrücken des zweiten Andruckelements in die vorderste Position,
- Fig. 9: eine perspektivische Darstellung mehrerer in Anlage an einem Ski befindlicher Andruckelemente in einer Ausgestaltung, die nicht im Rahmen der Erfindung fällt.

Die in der Zeichnung dargestellte Vorrichtung dient zum Transport von Werkstücken 1, insbesondere von länglichen Werkstücken wie Ski und vergleichbaren Gegenständen, um an diesen Bearbeitungsvorgänge vornehmen zu können. Zu derartigen Bearbeitungsvorgängen zählt beispielsweise das Nachschleifen von bereits in Gebrauch befindlichen Skiern, so dass die Vorrichtung so ausgebildet sein muss, dass sie sich an in ihrer Form und ihren Abmessungen unterschiedlich gestaltete Ski selbsttätig anpasst.

Die Vorrichtung ist im Einzelnen mit einem nicht näher dargestellten Transportband 2 zur Auflage der Werkstücke 1 versehen, ferner mit Andruckelementen 3, die die Werkstücke 1 in Anlage am Transportband 2 bringen und dort halten.

Ferner weist die Vorrichtung eine ebenfalls in der Zeichnung nicht näher dargestellte Antriebseinheit für die Andruckelemente 3 auf.

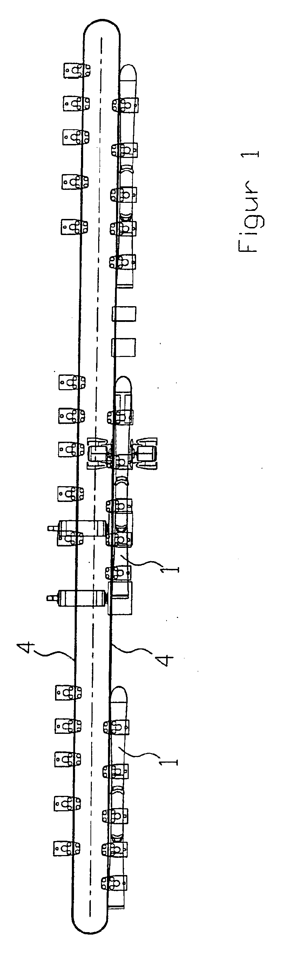

Im Einzelnen treibt die Antriebseinheit ein - wie in Fig. 1 dargestellt - vorzugsweise endloses Förderband 4 an, an welchem die Andruckelemente 3 lösbar anschließbar sind.

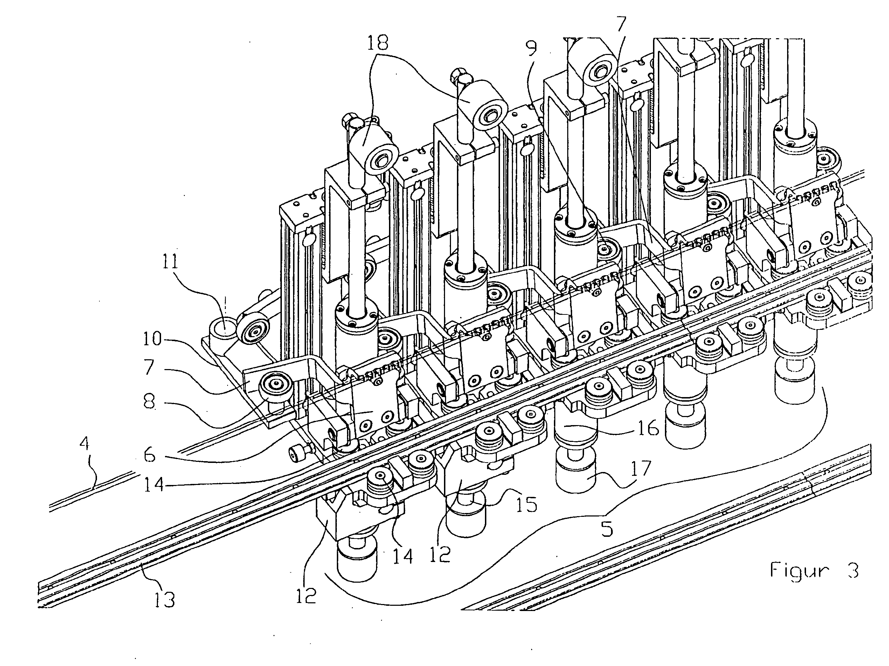

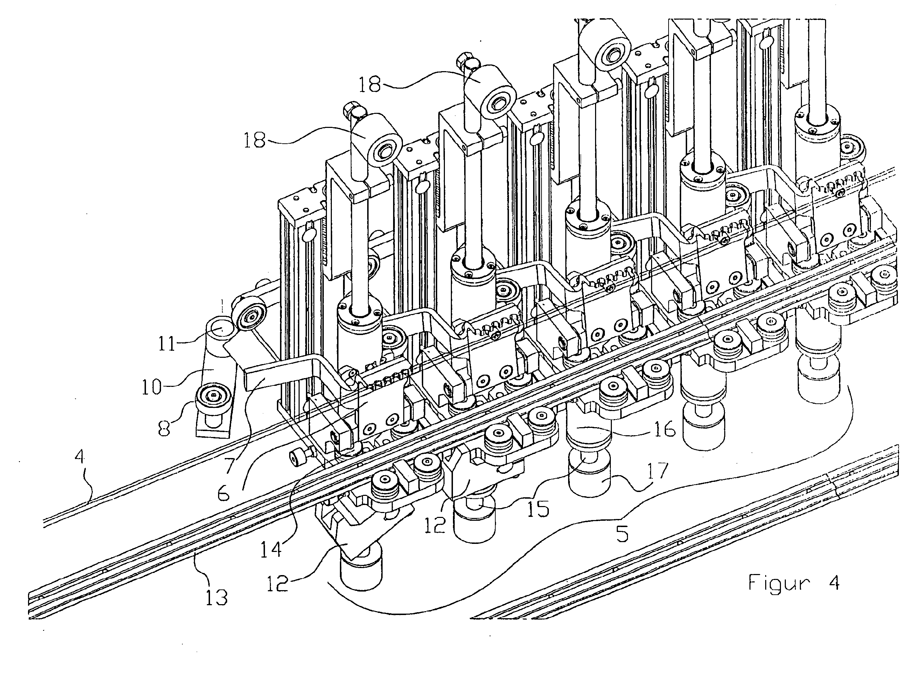

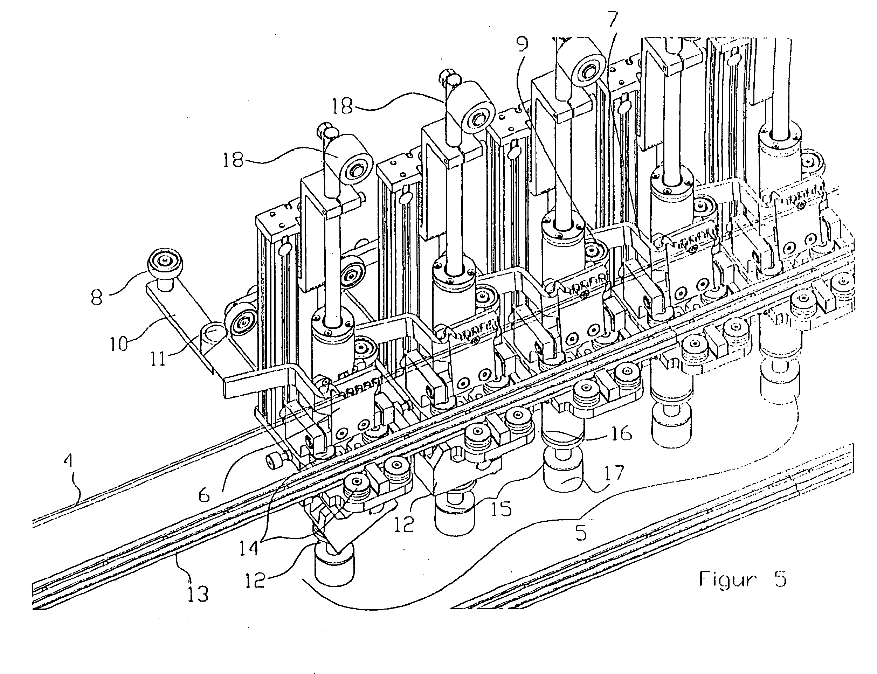

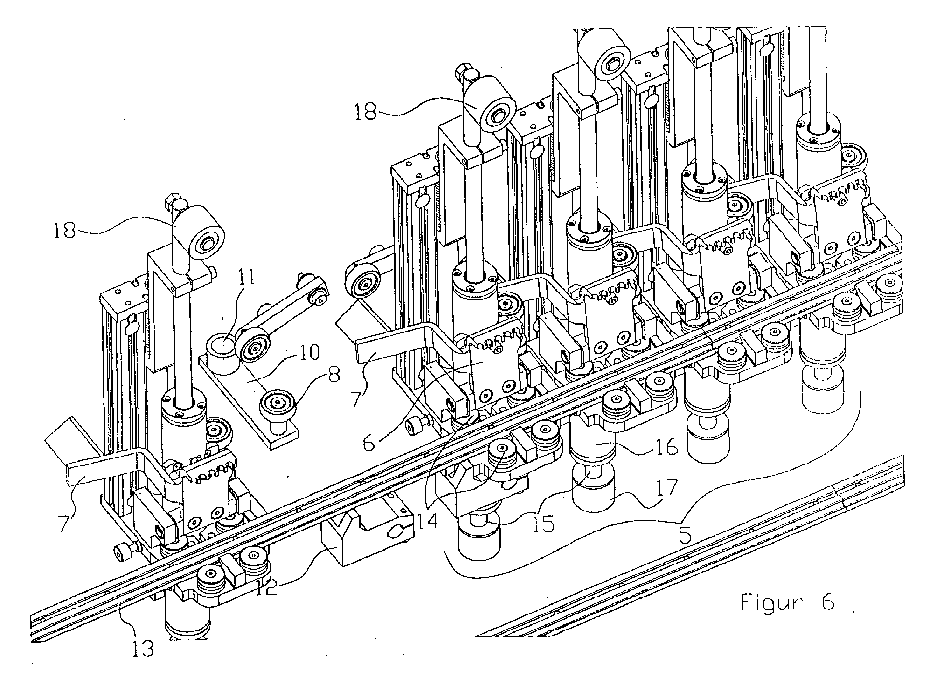

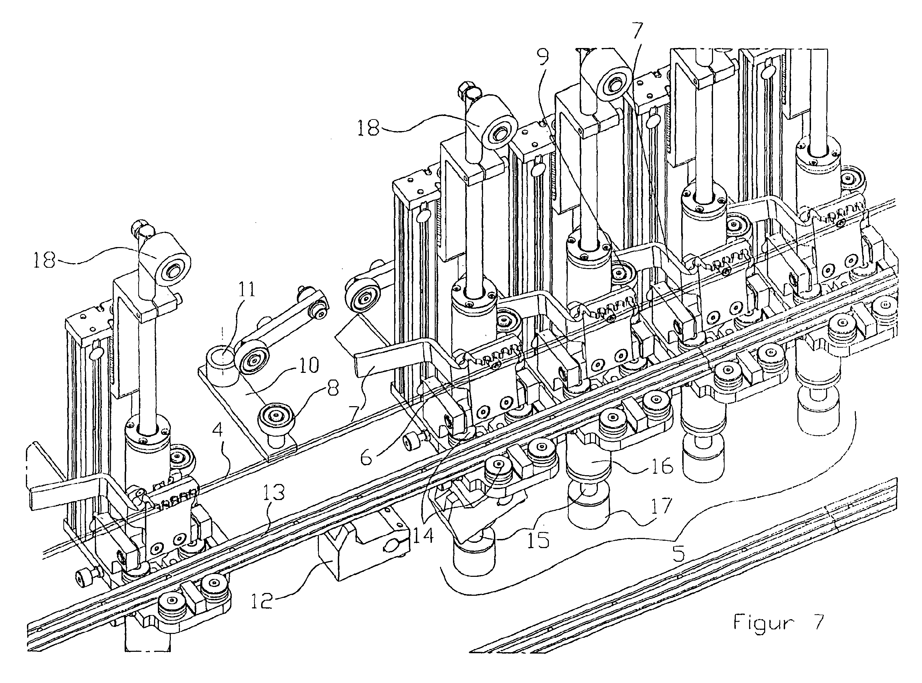

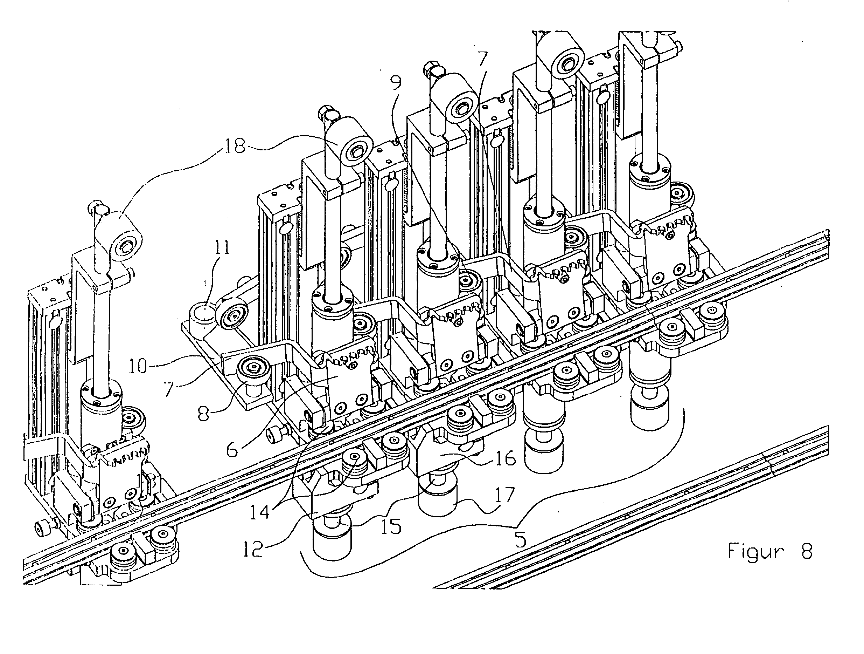

Weiter ist eine Sammelstation 5 für die Andruckelemente 3 vorgesehen, wie sie in den Fig. 3 - 8 näher dargestellt ist. In dieser Sammelstation 5 werden die von dem Förderband 4 gelösten Andruckelemente 3 aufgereiht, wobei das in Laufrichtung des Förderbandes 4 vorderste Andruckelement 3 durch eine Steuereinheit an das Förderband angeschlossen und in der Folge dann in Anlage an das Werkstück 1 gebracht werden kann. Der Anschluss des jeweiligen Andruckelements 3 am Förderband erfolgt dabei unter Berücksichtigung der Position des Werkstücks 1 durch eine getrennte Steuereinheit, die in der Zeichnung nicht näher dargestellt ist und auf die hier im Übrigen auch nicht näher eingegangen werden soll. Diese Steuereinheit kann beispielsweise im Wege einer optischen Abtastung Besonderheiten des Werkstücks 1 berücksichtigen, hier also beispielsweise Anfang und Ende des Skis sowie die Position der Bindung, damit beispielsweise ein Andruckelement 3 nicht untmittelbar auf die Spitze des Skis oder auf die Bindung aufgesetzt wird.

Das Andruckelement 3 ist zum Anschluss an das Förderband 4 mit einem Klemmglied 6 versehen, das über einen Stellhebel 7 in eine vom Förderband 4 abgehobene Lage verstellbar ist. Somit kann durch Betätigung des Stellhebels 7 das Andruckelement 3 am Förderband 4 angeschlossen oder von diesem wieder gelöst werden.

Hierzu ist in der Sammelstation 5 jeweils ein Betätigungselement 8 für den Stellhebel 7 des in erster und in zweiter Position befindlichen Andruckelements 3 vorgesehen. Ferner muss jedes in der Sammelstation 5 ankommende Andruckelement 3 vom Förderband 4 gelöst werden, sobald es auf das vorangehende Andruckelement 3 aufläuft. Hierzu weist jedes Andruckelement 3 auf seiner dem jeweils nachfolgenden Andruckelement zugewandten Rückseite ebenfalls ein Betätigungselement 9 für den Stellhebel 7 auf.

Um das jeweils vorderste Andruckelement 3 in der Sammelstation 5 wiederum auf das Förderband 4 aufkoppeln zu können, ist jedes Betätigungselement 8 der Sammelstation zur Freigabe des Andruckelements 3 verstellbar ausgebildet.

Weiter weist die Sammelstation 5 für die Vereinzelung des an erster Position befindlichen Andruckelements 3 zusätzlich einen um eine zur Transportebene senkrechte Achse 11 drehbar angeordneten Hebel 10 auf, der bei Freigabe des vordersten Andruckelements 3 eine vollständige Drehung um 360 Grad ausführt. Während dieser vollständigen Drehung verlässt das an erster Position befindliche Andruckelement 3 vollständig die Sammelstation 5.

Um eine reibungsfreie Betätigung der Stellhebel 7 zu gewährleisten, weist das Betätigungselement 8,9 eine Rolle auf, über die das Betätigungselement 8,9 am Stellhebel 7 zur Anlage kommt.

Die Sammelstation 5 ist ferner für das jeweils erste und zweite Andruckelement 3 mit einer als Anschlag wirkenden Sperrklinke 12 versehen. Bei Freigabe des an erster Position befindlichen Andruckelements 3 wird zunächst die erste Sperrklinke 12 ausgelöst, wonach das vorderste Andruckelement 3 freigegeben wird. Erst nach Rückkehr der ersten Sperrklinke 12 in ihre Ausgangslage wird dann die zweite Sperrklinke 12 ausgelöst, wodurch das an Position zwei befindliche Andruckelement 3 in die erste Postion vorrücken kann.

Wenn auch grundsätzlich die Möglichkeit besteht, das Förderband 4 steif auszubilden, so dass die Andruckelemente 3 über das Förderband 4 ihre Führung erfahren, so ist es in der Praxis vorteilhafter, wenn die Andruckelmente 3 an einer Führungschiene 13 über beidseitig an der Führungsschiene 13 ablaufende Rollen 14 geführt sind. Hierdurch kann das Förderband 4 in einfacher zu handhabender Weise flexibel ausgestaltet sein.

Die Andruckelmente 3 sind mit senkrecht zur Transportebene ausgerichteten axial verstellbaren Druckstangen 15 versehen, die in einem Gehäuse 16 der Andruckelemente 3 geführt sind. In dem Gehäuse 16 ist eine an der Druckstange 15 angreifende elastische Federkraft vorgesehen, die in besonders einfacher und nicht näher dargestellter Weise von einer Schraubenfeder gebildet sein kann.

Wie sich weiter aus der Zeichnung ersehen lässt, ist die dem Werkstück 1 zugewandte Seite der Druckstange 15 mit einem Druckstempel 17 versehen, der in seiner Oberflächenbeschaffenheit und Formgebung an das jeweilige Werkstück 1 angepasst sein kann. Die dem Werkstück 1 abgewandte Seite der Druckstange 15 ist dagegen mit einem Laufrad 18 versehen, das an einer die axiale Lage der Druckstange 15 bestimmenden Kulissenschiene 19 abläuft. Diese Kulissenschiene 19 ist von einzelnen Kulissensegmenten gebildet, die gelenkig aneinander anschließen und in ihrem Abstand zur Transportebene verstellbar sind. Hierdurch kann die axiale Lage der Druckstange 15 über die Einstellung der Kulissensegmente beeinflusst werden. Dies erfolgt hier in der Weise, daß die Stellung der einzelnen Kulissensegmente von der Steuereinheit angesteuert wird.

Das Förderband kann schließlich in ebenfalls nicht näher dargestellten Weise von einem Riemen, einer Kette einem Seil oder ähnlichem gebildet sein.

In den Figuren 3 - 8 ist detailliert dargestellt, wie die Vereinzelung des jeweils in erster Position befindlichen Andruckelements 3 abläuft.

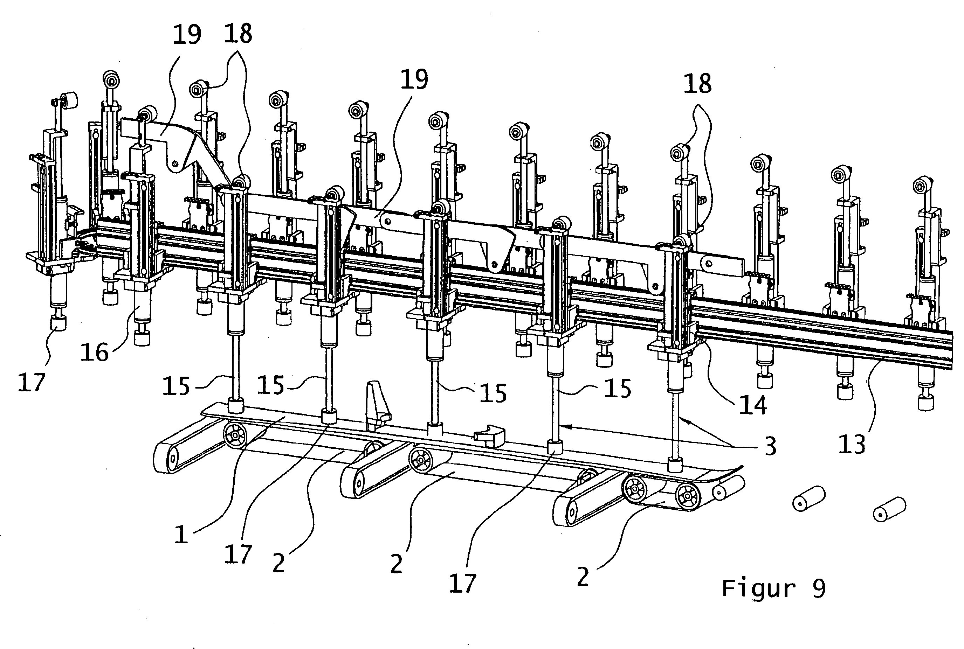

Bei der nicht zur Erfindung gehörenden Ausführungsform nach Fig. 9 wird - wie ebenfalls schon in Fig. 1 dargestellt - ein vorzugsweise endloses Förderband 4 angetrieben, an welchem die Andruckelemente 3 jedoch in vorgegebenen Abständen fest angeschlossen sind bzw. angeschlossen bleiben. Dies kann beispielsweise derart erfolgen, daß die Andruckelemente 3 nur in solcher Anzahl vorhanden sind, daß sie bei vorgesehener Verteilung längs des Förderbandes 4 an diesem fest verbleiben können, also nicht meht gelöst zu werden brauchen. Weiter ist eine nicht näher dargestellte Steuereinheit für die Andruckelemente 3 vorgesehen, die unter Berücksichtigung der Position und Form des Werkstücks 1 die jeweils benötigten Andruckelemente 3 in Anlage an das Werkstück 1 bringt bzw. von diesem wieder abhebt.

Die Andruckelemente 3 sind unter gleichem Abstand an das Förderband 4 angeschlossen, was den Vorteil hat, daß hierdurch die Ansteuerung einfacher wird. Grundsätzlich können die Andruckelemente 3 allerdings auch in unterschiedlichen Abständen angeordnet sein, sofern dies im Einzelfall günstiger ist.

## Patentansprüche

1. Vorrichtung zum Transport von Werkstücken (1), insbesondere von länglichen Werkstücken wie Skier und vergleichbaren Gegenständen zur Durchführung von Bearbeitungsvorgängen, mit einem Transportband (2) zur Auflage der Werkstücke (1), ferner mit die Werkstücke (1) in Anlage am Transportband (2) bringenden bzw. haltenden Andruckelementen (3) sowie mit einer Antriebseinheit für die Andruckelemente (3), **dadurch gekennzeichnet, daß** die Antriebseinheit ein vorzugsweise endloses Förderband (4) antreibt, an welchem die Andruckelemente (3) lösbar anschließbar sind, und daß eine Sammelstation (5) für die Andruckelemente (3) vorgesehen ist, in der die von dem Förderband (4) gelösten Andruckelemente (3) aufgereiht und das in Laufrichtung des Förderbandes (4) vorderste Andruckelement unter Berücksichtigung der Position des Werkstücks (1) durch eine Steuereinheit an das Förderband (4) angeschlossen und in Anlage an das Werkstück (1) gebracht wird.

2. Vorrichtung nach Anspruch 1, **dadurch gekennzeichnet, daß** das Andruckelement (3) zum Anschluß an das Förderband ein Klemmglied (6) aufweist, das über einen Stellhebel (7) in eine vom Förderband (4) abgehobene Lage verstellbar ist.

3. Vorrichtung nach Anspruch 2, **dadurch gekennzeichnet, daß** die Sammelstation (5) jeweils ein Betätigungselement (8) für den Stellhebel (7) des ersten und zweiten Andruckelements (3) aufweist.

4. Vorrichtung nach Anspruch 3, **dadurch gekennzeichnet, daß** jedes Andruckelement (3) auf seiner dem jeweils nachfolgenden Andruckelement (3) zugewandten Rückseite ein Betätigungselement (9) für den Stellhebel (7) aufweist.

5. Vorrichtung nach Anspruch 3 oder 4, **dadurch gekennzeichnet, daß** jedes Betätigungselement (8) der Sammelstation (5) zur Freigabe des Andruckelements (3) verstellbar ausgebildet ist.

6. Vorrichtung nach Anspruch 5, **dadurch gekennzeichnet, daß** die Sammelstation (5) zusätzlich einen um eine zur Transportebene senkrechte Achse (11) drehbar angeordneten Hebel (10) aufweist, der das Betätigungselement (8) trägt und bei Freigabe des vordersten Andruckelements (3) eine vollständige Drehung um 360° ausführt.

7. Vorrichtung nach einem der Ansprüche 4 bis 5, **dadurch gekennzeichnet, daß** das Betätigungselement (8,9) eine zur Anlage an dem Stellhebel (7) kommende Rolle aufweist.

8. Vorrichtung nach einem der Ansprüche 1 bis 7, **dadurch gekennzeichnet, daß** die Sammelstation (5) für das jeweils erste und zweite Andruckelement (3) eine als Anschlag wirkende Sperrklinke (12) aufweist, wobei bei Freigabe eines Andruckelements (3) zunächst die erste Sperrklinke (12) auslöst und nach deren Rückkehr in die Ausgangslage die zweite Sperrklinke (12) auslöst.

9. Vorrichtung nach einem der Ansprüche 1 bis 8, **dadurch gekennzeichnet, daß** die Andruckelemente (3) an einer Führungsschiene (13) über beidseitig an der Führungsschiene (13) ablaufende Rollen (14) geführt sind.

10. Vorrichtung nach einem der Ansprüche 1 bis 9, **dadurch gekennzeichnet, daß** die Andruckelemente (3) mit senkrecht zur Transportebene ausgerichteten, axial verstellbaren Druckstangen (15) versehen sind.

11. Vorrichtung nach Anspruch 10, **dadurch gekennzeichnet, daß** die Druckstangen (15) in einem Gehäuse (16) geführt sind, wobei im Gehäuse (16) eine an der Druckstange (15) angreifende elastische Federkraft vorgesehen ist.

12. Vorrichtung nach Anspruch 11, **dadurch gekennzeichnet, daß** die elastische Federkraft von einer Schraubenfeder gebildet ist.

13. Vorrichtung nach Anspruch 11 oder 12, **dadurch gekennzeichnet, daß** die dem Werkstück (1) zugewandte Seite der Druckstange (15) mit einem Druckstempel (17) versehen ist.

14. Vorrichtung nach einem der Ansprüche 11 bis 13, **dadurch gekennzeichnet, daß** die dem Werkstück (1) abgewandte Seite der Druckstange (15) mit einem Laufrad (18) versehen ist, das an einer die axiale Lage der Druckstange (15) bestimmenden Kulissenschiene (19) abläuft.

15. Vorrichtung nach Anspruch 14, **dadurch gekennzeichnet, daß** die Kulissenschiene (19) von einzelnen Kulissensegmenten gebildet ist, die gelenkig aneinander anschliessen und in ihrem Abstand zur Transportebene verstellbar sind.

16. Vorrichtung nach Anspruch 14 oder 15, **dadurch gekennzeichnet, daß** die Stellung der Kulissenschienen von der Steuereinheit angesteuert wird.

17. Vorrichtung nach einem der Ansprüche 1 bis 16, **dadurch gekennzeichnet, daß** das Förderband (4) von einem Riemen, einer Kette, einem Seil oder ähnlichem gebildet sind.

## Claims

1. Apparatus for transporting workpieces (1), in particular elongate workpieces like skis and comparable articles, for carrying out working operations, comprising a transport belt (2) for supporting the workpieces (1), further comprising pressure elements (3) which bring or hold the workpieces (1) in contact on the transport belt (2), and a drive unit for the pressure elements (3), **characterised in that** the drive unit drives a preferably endless conveyor belt (4) to which the pressure elements (3) can be releasably connected and that there is provided a collecting station (5) for the pressure elements (3), in which the pressure elements (3) released from the conveyor belt (4) are lined up and the pressure element which is foremost in the direction of movement of the conveyor belt (4) is connected to the conveyor belt (4) having regard to the position of the workpiece (1) by a control unit and are caused to bear against the workpiece (1).

2. Apparatus according to claim 1 **characterised in that** the pressure element (3) for connection to the conveyor belt has a clamping member (6) which is displaceable by way of a control lever (7) into a position of being lifted off the conveyor belt (4).

3. Apparatus according to claim 2 **characterised in that** the collecting station (5) has a respective actuating element (8) for the control lever (7) of the first and second pressure elements (3).

4. Apparatus according to claim 3 **characterised in that** each pressure element (3) has an actuating element (9) for the control lever (7) on its rear side that is towards the respectively following pressure element (3).

5. Apparatus according to claim 3 or claim 4 **characterised in that** each actuating element (8) of the collecting station (5) is adapted to be displaceable to release the pressure element (3).

6. Apparatus according to claim 5 **characterised in that** the collecting station (5) additionally has a lever (10) which is rotatable about an axis (11) perpendicular to the transport plane and which carries the actuating element (8) and which performs a complete rotation through 360° upon release of the foremost pressure element (3).

7. Apparatus according to one of claims 4 and 5 **characterised in that** the actuating element (8, 9) has a roller which comes to bear against the control lever (7).

8. Apparatus according to one of claims 1 to 7 **characterised in that** for the respective first and second pressure elements (3) the collecting station (5) has a locking pawl (12) acting as an abutment, wherein upon release of a pressure element (3) firstly the first locking pawl (12) is released and after the return thereof into the starting position the second locking pawl (12) is released.

9. Apparatus according to one of claims 1 to 8 **characterised in that** the pressure elements (3) are guided at a guide rail (13) by way of rollers (14) running against the guide rail (13) at both sides.

10. Apparatus according to one of claims 1 to 9 **characterised in that** the pressure elements (3) are provided with axially displaceable pressure bars (15) oriented perpendicularly to the transport plane.

11. Apparatus according to claim 10 **characterised in that** the pressure bars (15) are guided in a housing (16), wherein provided in the housing (16) is an elastic spring force engaging the pressure bar (15).

12. Apparatus according to claim 11 **characterised in that** the elastic spring force is formed by a coil spring.

13. Apparatus according to claim 11 or claim 12 **characterised in that** the side of the pressure bar (15), that is towards the workpiece (1), is provided with a pressure pad (17).

14. Apparatus according to one of claims 11 to 13 **characterised in that** the side of the pressure bar (15), that is remote from the workpiece (1), is provided with a runner wheel (18) running on a sliding guide rail (19) which determines the axial position of the pressure bar (15).

15. Apparatus according to claim 14 **characterised in that** the sliding guide rail (19) is formed by individual sliding guide segments which hingedly adjoin each other and which are adjustable in their spacing relative to the transport plane.

16. Apparatus according to claim 14 or claim 15 **characterised in that** the position of the sliding guide rails is controlled by the control unit.

17. Apparatus according to one of claims 1 to 16 **characterised in that** the conveyor belt (4) is formed by a belt, a chain, a cable or the like.

## Revendications

1. Dispositif pour transporter des pièces (1), en particulier des pièces allongées comme des skis et des objets comparables en vue de réaliser des opérations d'usinage, comprenant une bande de transport (2) pour poser les pièces (1), comprenant des éléments presseurs (3) pour mettre ou maintenir les pièces (1) en appui sur la bande de transport (2), et comprenant une unité d'entraînement pour les éléments presseurs (3), **caractérisé en ce que** l'unité d'entraînement entraîne une bande transporteuse (4) de préférence sans fin, à laquelle les éléments presseurs (3) peuvent être raccordés de manière détachable, et **en ce qu'**une station de collecte (5) des éléments presseurs (3) est prévue, dans laquelle les éléments presseurs (3) détachés de la bande transporteuse (4) sont alignés et l'élément presseur le plus en avant dans le sens de déplacement de la bande transporteuse (4) est raccordé à la bande transporteuse (4) et mis en appui contre la pièce (1) par une unité de commande en tenant compte de la position de la pièce (1).

2. Dispositif selon la revendication 1, **caractérisé en ce que** l'élément presseur (3) présente, pour le raccordement à la bande transporteuse, un élément de serrage (6) qui, par l'intermédiaire d'un levier de commande (7), est réglable vers une position relevée par rapport à la bande transporteuse (4).

3. Dispositif selon la revendication 2, **caractérisé en ce que** la station de collecte (5) présente chaque fois un élément d'actionnement (8) pour le levier de commande (7) du premier et du deuxième élément presseur (3).

4. Dispositif selon la revendication 3, **caractérisé en ce que** chaque élément presseur (3) présente un élément d'actionnement (9) pour le levier de commande (7) sur son côté arrière tourné vers l'élément presseur (3) suivant respectif.

5. Dispositif selon la revendication 3 ou 4, **caractérisé en ce que** chaque élément d'actionnement (8) de la station de collecte (5) est réalisé de manière à pouvoir être réglé pour libérer l'élément presseur (3).

6. Dispositif selon la revendication 5, **caractérisé en ce que** la station de collecte (5) présente en outre un levier (10) qui est disposé pour pouvoir tourner autour d'un axe (11) perpendiculaire au plan de transport et porte l'élément d'actionnement (8) et qui accomplit une rotation complète de 360° lors de la libération de l'élément presseur (3) le plus en avant.

7. Dispositif selon une des revendications 4 à 5, **caractérisé en ce que** l'élément d'actionnement (8, 9) présente un galet venant en appui contre le levier de commande (7).

8. Dispositif selon une des revendications 1 à 7, **caractérisé en ce que** la station de collecte (5) présente, pour les premier et deuxième éléments presseurs (3) respectifs, un cliquet d'arrêt (12) agissant comme butée, le premier cliquet d'arrêt (12) se déclenchant d'abord lors de la libération d'un élément presseur (3) et le deuxième cliquet d'arrêt (12) se déclenchant après son retour dans la position initiale.

9. Dispositif selon une des revendications 1 à 8, **caractérisé en ce que** les éléments presseurs (3) sont guidés sur un rail de guidage (13) au moyen de galets (14) roulant des deux côtés du rail de guidage (13).

10. Dispositif selon une des revendications 1 à 9, **caractérisé en ce que** les éléments presseurs (3) sont munis de tiges de poussée (15) réglables axialement, orientées perpendiculairement au plan de transport.

11. Dispositif selon la revendication 10, **caractérisé en ce que** les tiges de poussée (15) sont guidées dans un boîtier (16), une force de ressort élastique agissant sur la tige de poussée (15) étant prévue dans le boîtier (16).

12. Dispositif selon la revendication 11, **caractérisé en ce que** la force de ressort élastique est générée par un ressort hélicoïdal.

13. Dispositif selon la revendication 11 ou 12, **caractérisé en ce que** le côté de la tige de poussée (15) tourné vers la pièce (1) est muni d'un piston (17).

14. Dispositif selon une des revendications 11 à 13, **caractérisé en ce que** le côté de la tige de poussée (15) éloigné de la pièce (1) est muni d'une roue (18), laquelle roule sur un rail de coulisse (19) qui détermine la position axiale de la tige de poussée (15).

15. Dispositif selon la revendication 14, **caractérisé en ce que** le rail de coulisse (19) est formé de segments de coulisse individuels qui se raccordent les uns aux autres de manière articulée et dont la distance par rapport au plan de transport est réglable.

16. Dispositif selon la revendication 14 ou 15, **caractérisé en ce que** la position des rails de coulisse est commandée par l'unité de commande.

17. Dispositif selon une des revendications 1 à 16, **caractérisé en ce que** la bande transporteuse (4) est formée par une courroie, une chaîne, un câble ou analogue.
